(19) Europäisches Patentamt
European Patent Office
Office européen des brevets

(11) **EP 0 628 958 B1**

(12) **EUROPEAN PATENT SPECIFICATION**

(45) Date of publication and mention
of the grant of the patent:
**02.09.1998 Bulletin 1998/36**

(51) Int Cl.⁶: **G11B 7/24**

(21) Application number: **94201586.8**

(22) Date of filing: **03.06.1994**

(54) **Optical record carrier**

Optischer Aufzeichnungsträger

Support d'enregistrement optique

(84) Designated Contracting States:
**AT DE FR GB IT**

(30) Priority: **10.06.1993 EP 93201654**

(43) Date of publication of application:
**14.12.1994 Bulletin 1994/50**

(73) Proprietor: **PHILIPS ELECTRONICS N.V.**
**5621 BA Eindhoven (NL)**

(72) Inventor: **van Uijen, Cornelis Marinus Johannes**
**NL-5656 AA Eindhoven (NL)**

(74) Representative: **Visser, Derk et al**
**INTERNATIONAAL OCTROOIBUREAU B.V.,**
**Prof. Holstlaan 6**
**5656 AA Eindhoven (NL)**

(56) References cited:
**EP-A- 0 286 938**          **EP-A- 0 288 140**
**EP-A- 0 549 024**          **GB-A- 2 198 279**

- **APPLIED OPTICS, vol.25, no.24, December 1986,**
  **NEW YORK US pages 4562 - 4567 T. G.**
  **GAYLORD ET AL. 'Zero-reflectivity**
  **high-spatial-frequency rectangular-groove**
  **dielectric surface-relief gratings'**

# Description

The invention relates to an optical record carrier for writing and/or reading information by means of a radiation beam, which record carrier comprises a transparent substrate having an entrance face for the radiation beam and an opposite face, and a recording layer arranged on said opposite face.

Many known optical record carriers such as an audio disc known as the Compact Disc (CD), a data disc known as Compact Disc Read Only Memory (CD-ROM) and Laser Vision (LV) are provided with information by the manufacturer and can only be read by the user. A record carrier which is inscribable in a special write/read device and readable with the same read device as the one intended for reading the above-mentioned, non-inscribable record carriers is applicable in a great many places. Applications are distribution of information in the form of audio or digital data to a small number of clients, for which the manufacture of a normal CD or CD-ROM is too expensive. However, for readability, the inscribed record carrier should then satisfy the same standard requirements as the non-inscribable record carrier. This involves an initial reflection of the recording layer of 70% or more and a contrast of 60%. The initial reflection is the reflection of a non-inscribed part of the record carrier, while the contrast is the difference in reflection of the non-inscribed parts and the inscribed parts, divided by the initial reflection. It is found to be difficult to manufacture an inscribable record carrier which meets these requirements. This is particularly the case if use is to be made of materials referred to as phase-change materials for the recording layer. The crystalline or amorphous phase of these materials changes by irradiation with a laser beam from one into the other, resulting in a change of the coefficient of reflection of the material. When writing in a record carrier having an initial reflection of 70%, at most 30% of the radiation will be absorbed in the layer. The reflection is due to reflection on the entrance face of the record carrier and reflection on the recording layer. It has turned out to be difficult to couple the required amount of energy for writing into the layer when using present-day diode lasers as are commonly employed in read/write devices.

A record carrier of the type given in the opening paragraph and providing a possible solution to the above problem is described in the non-prepublished European Patent Application EP-A-0 549 024. The entrance surface of this record carrier is provided with an anti-reflection coating. The coating reduces the reflection losses on the entrance face. Consequently, more radiation reaches the recording layer and is available for inscribing.

However, a drawback of the record carrier with such a coating is that the quality of reading and writing by means of a large numerical aperture beam is worse as compared with a record carrier without a coating.

It is an object of the invention to provide a record carrier in which the amount of energy required for writing can be deposited in the layer, allowing high-quality reading and writing.

This object is achieved by a record carrier as described in the opening paragraph and which is characterized according to the invention in that the entrance face is provided with an anti-reflection relief structure. It has been found that the deterioration of the quality of reading and writing of a record carrier having an anti-reflection coating is due to the fact that the transmission and reflection properties of the coating depend on the angle of incidence of the radiation. The radiation near the edge of an incident beam with a large numerical aperture, which radiation impinges at a large angle of incidence, experiences a lower transmission through the anti-reflection coating on the entrance face than radiation incident along the normal of the entrance face. This will modify the distribution of the intensity over the cross-section of the beam, resulting in a reduced quality of the spot formed by the beam, which in turn affects the quality of reading and writing of the record carrier. It has been found that an anti-reflection means in the form of a relief structure has a much smaller angle dependence of the transmission and reflection than a coating and also provides a better anti-reflection effect than a one-layer coating. Such a relief structure therefore improves the quality of reading and writing and increases the amount of energy available for writing on the record carrier.

In order to provide a good anti-reflection effect for a focused radiation beam incident along the normal of the entrance face, the record carrier according to the invention is preferably characterized in that the anti-reflection relief structure complies with

$$p_2 < \frac{\lambda}{1 + NA},$$

where $p_2$ is a characteristic dimension of the relief structure in the plane of the entrance face, $\lambda$ is the wavelength of the radiation beam and $NA$ is the numerical aperture of the radiation beam.

The transmission of the entrance face can be further increased if the dimension of the relief structure complies with

$$p_2 < \frac{\lambda}{n + NA},$$

where $n$ is the refractive index of the substrate. The characteristic dimension of the relief structure is the period of repetition of a feature of the relief such as a groove or a bump. If the structure has random features, the characteristic dimension is the average period of repetition.

A special embodiment of the record carrier according to the invention is characterized in that the depth of the anti-reflection relief structure is larger than the depth of a tracking relief structure in the recording layer. If this relation is complied with, an information signal will be obtained from the information relief during reading with a high signal-to-noise ratio, while at the same time the required anti-reflection properties are realized.

Most optical discs are made by embossing a tracking relief structure in or on the substrate. The tracking relief structure is used to guide a radiation beam with which the disc is scanned along tracks during reading or writing of the disc. The tracking relief structure may comprise grooves or dykes in between which information can be recorded. Likewise it may comprise embossed information areas which constitute a structure that can be followed by a scanning beam. The mastering equipment for making the moulds used in the embossing process are adapted to write the tracking relief structure in a pattern having a certain geometry, for instance concentric circles or spirals for a disc-shaped record carrier or parallel straight lines for a rectangular record carrier. If the record carrier according to the invention is further characterized in that the anti-reflection relief structure has the same overall symmetry as the tracking relief structure, the same mastering equipment used for making the mould with the tracking relief structure can also be used for making a mould with the anti-reflection relief structure. This yields a considerable reduction of the cost of making the mould with the relief structure for the entrance face, and hence of the record carriers made by means of the mould. An additional advantage of a record carrier comprising a tracking relief structure and an anti-reflection relief structure having the same symmetry is that the radiation beam following the tracks always experiences an equal orientation of the anti-reflection relief structure. Since the characteristic dimension of the relief structure is smaller than the wavelength of the radiation beam, the anti-reflection effect generated by the structure depends on the direction of polarization of the radiation. If the orientation of the anti-reflection relief structure does not change for the beam travelling along a track, the anti-reflection effect does not change during said travelling. The shape of the anti-reflection relief structure can then be optimized for a high anti-reflection effect for a given polarization of the radiation beam.

A special embodiment of the record carrier according to the invention is characterized in that the anti-reflection relief structure comprises a grating, the characteristic dimension in the plane of the entrance face being the pitch of the grating. A grating structure can be made relatively easily, with a good uniformity throughout the record carrier.

The grooves of the grating preferably have a triangular cross-section, giving a good anti-reflection effect.

The relief structure can be eminently used on a record carrier the recording layer of which contains a phase-change material. While complying with the requirements imposed on a CD, it is possible to inscribe such record carriers with present-day laser diodes. Such a record carrier can be inscribed with present-day laser diodes, while at the same time complying with the requirements of a standard CD.

A high reflection of the information layer can be achieved when a reflection layer and an interference layer, in this order, are arranged between the substrate and the recording layer.

It is to be noted that a relief structure for anti-reflection purposes is known from the article "Zero-reflectivity high spatial-frequency rectangular-groove dielectric surface-relief gratings" published in Applied Optics, Vol. 25, no. 4, 15 December 1986, pages 4562 to 4567. However, this article does not disclose the use of the surface-relief gratings on optical record carriers or the advantages that can be achieved by such use.

The invention will now be described in greater detail by way of example with reference to the accompanying drawings in which

Figure 1 is a plan view of the recording layer on a disc-shaped record carrier;
Figure 2 shows a cross-section of part of the record carrier taken on the line A-A; and
Figure 3 shows the entrance surface of the record carrier.

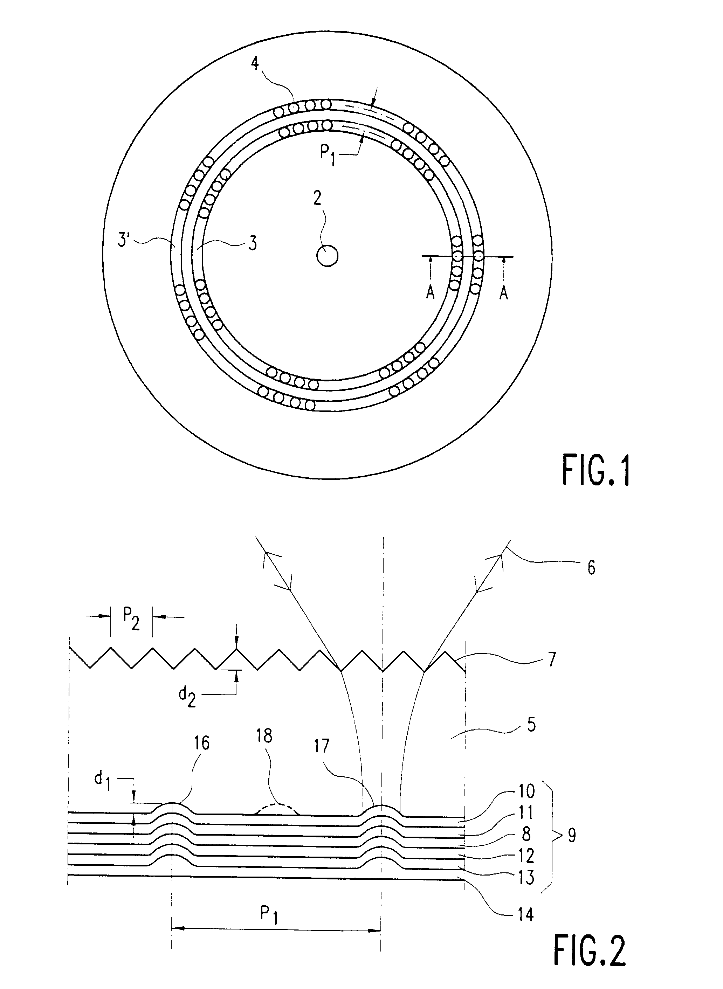

Figure 1 is a plan view of the recording layer on an optical record carrier 1 according to the invention. The record carrier is disc-shaped and has a centre hole 2 for receiving a spindle to rotate the disc. The information may be or has been laid down in a recording layer in the form of information areas which are optically distinguishable from their surroundings. These areas may have, for example, a different refractive index and hence a different reflection coefficient than their surroundings, or they may have the form of embossed pits. The information areas are arranged in tracks 3, 3', two of which are indicated in the Figure. The tracks may be concentric circles or they may form a spiral. The tracks comprise information areas in the form of embossed pits 4, together constituting a tracking relief structure. This structure includes headers containing information on the division of a track into sectors. The part of a track in between consecutive headers is then available for embossing or writing user data. The radial distance between the centre lines of the tracks, the pitch $p_1$, is chosen in dependence on parameters such as the wavelength and the numerical aperture of the beam with which the record carrier is to be scanned.

Figure 2 is a cross-section of the optical record carrier 1 taken on the line A-A. The record carrier has a substrate 5 which may be made of, for example, a sheet of plastic or glass. The radiation beam 6, generated in an optical scanning apparatus as described in, for example United States Patent No. 3 376 842 with which the record carrier can be written and/or read, enters the substrate through an entrance face 7 of the record carrier. The beam is focused on the recording layer 8. In a preferred embodiment the recording layer is embedded in a stack 9 of layers. The stack comprising a partially reflecting layer 10, a transparent interference layer 11, the recording layer 8, a further interference layer 12 and a reflection layer 13 is provided on the substrate and opposite the entrance face. At the side of the stack the record carrier may be coated with a protective coating 14 which may be made of an organic material. The stack improves the optical contrast of the information areas written into the recording layer 8 and increases the reflection of the record carrier as a whole. The recording layer is made of a phase-change material, allowing data to be written into those parts of the tracks that have no embossed pits. The recording properties of the phase-change material and the principle of the reflection enhancement of the stack have been described in the above-mentioned European Patent Application EP-A-0 549 024. The cross-section of Figure 2 is made through two embossed pits 16, 17 in to the neighbouring tracks 3, 3', respectively. In order to improve the tracking of the beam, a servo track in the form of a groove may have been formed between neighbouring tracks; the servo track may also have the shape of a dyke 18. The record carrier of the embodiment shown in the Figures has been designed to be scanned by a scanning beam having a wavelength of 780 nm and an NA of 0.6. The depth $d_1$ of the pits is 125 nm and the pitch of the tracks is 1.2 µm.

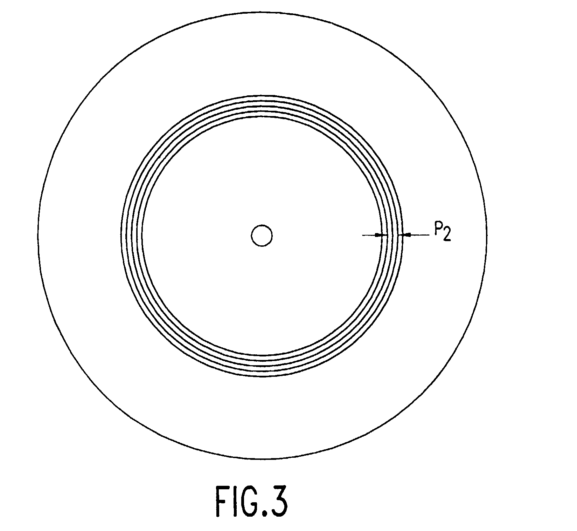

The anti-reflection relief structure on the entrance face 7 has the form of a grating with grooves having a triangular cross-section as shown in Figure 2. The pitch $p_2$ of the grooves is 0.45 µm and the depth $d_2$ is 0.4 µm for the above scanning beam with a wavelength of 780 nm and an NA of 0.6. The grooves may be concentric circles, as shown in Figure 3, or they may form a spiral, both showing the same overall symmetry as the tracking structure on the recording layer. The dimensions of the pits 16, 17 and the grooves in the figures have been exaggerated in relation to the thickness of the substrate 5 for clearness' sake.

The substrate 5 of the disc can be made of plastic by injection moulding. To this end a mastering apparatus writes a 1.2 µm pitch pattern with the tracking relief structure for a mould for shaping the side of the substrate facing the recording layer and a 0.45 µm pitch pattern for the anti-reflection relief structure for another mould for shaping the entrance face of the substrate. The substrate with both patterns is made in one production cycle by injection-moulding the substrate between the two moulds.

Another embodiment of the record carrier according to the invention and complying with the requirements of the Compact Disc standard has the following parameter values: $p_1$ is 1.6 µm, $d_1$ is 125 nm, $p_2$ is 0.5 µm and $d_2$ is 0.5 µm. This record carrier is designed to be scanned by a beam having a wavelength of 780 nm and an NA of 0.45. The stack 9 may have the following composition: 18 nm Au reflection layer 10, 150 nm $Ta_2O_5$ interference layer 11, 20 nm GeTe recording layer 8, 185 nm $Ta_2O_5$ interference layer 12 and 100 nm Au reflection layer 13. The reflection of the record carrier with this stack of layers complies with the requirements for the Compact Disc.

The invention is not limited to record carriers having an inscribable recording layer provided with embossed headers as shown in Figure 1 and an anti-reflection grating as shown in Figures 2 and 3. It will be clear that the advantages of the anti-reflection relief structure will also be obtained in a record carrier without embossed headers and in a record carrier with embossed information only, i.e. a read-only record carrier. The recording layer may be made of any material suitable for read-only, write-once or rewritable operation. The relief pattern on the entrance face may have grooves with a cross-section of any shape, for instance sinusoidal. The relief pattern may have an overall symmetry different from the symmetry of the tracking structure on the recording layer, for instance a rectangular relief structure and a circular tracking structure.

## Claims

1. An optical record carrier for writing and/or reading information by means of a radiation beam, which record carrier comprises a transparent substrate having an entrance face for the radiation beam and an opposite face, and a recording layer arranged on said opposite face, characterized in that the entrance face is provided with an anti-reflection relief structure.

2. An optical record carrier as claimed in Claim 1, characterized in that the anti-reflection relief structure complies with

$$p_2 < \frac{\lambda}{1 + NA},$$

where $p_2$ is a characteristic dimension of the relief structure in the plane of the entrance face, $\lambda$ is the wavelength of the radiation beam and $NA$ is the numerical aperture of the radiation beam.

3. An optical record carrier as claimed in Claim 1 or 2, characterized in that the depth of the anti-reflection relief structure is larger than the depth of a tracking relief structure in the recording layer.

4. An optical record carrier as claimed in Claim 1, 2 or 3, wherein the recording layer is provided with a tracking relief structure, and the anti-reflection relief structure has the same overall symmetry as the tracking relief structure.

5. An optical record carrier as claimed in Claim 1, 2, 3 or 4, wherein the anti-reflection relief structure comprises a grating, the characteristic dimension in the plane of the entrance face being the pitch of the grating.

6. An optical record carrier as claimed in Claim 5, wherein the anti-reflection grating has grooves with a triangular cross-section.

7. An optical record carrier as claimed in any one of Claims 1 to 6, wherein the recording layer contains a phase-change material.

8. An optical record carrier as claimed in any one of Claims 1 to 7, wherein a reflection layer and an interference layer, in this order, are arranged between the substrate and the recording layer.

**Patentansprüche**

1. Optischer Aufzeichnungsträger zum Einschreiben und/oder Auslesen von Information mittels eines Strahlungsbündels, wobei der Aufzeichnungsträger ein transparentes Substrat mit einer Eintrittsfläche für das Strahlungsbündel und einer gegenüberliegenden Fläche und eine Aufzeichnungsschicht auf der gegenüberliegenden Fläche enthält, dadurch gekennzeichnet, dass die Eintrittsfläche mit einer Antireflexionsreliefstruktur versehen ist.

2. Optischer Aufzeichnungsträger nach Anspruch 1, dadurch gekennzeichnet, dass die Antireflexionsreliefstruktur folgende Gleichung entspricht:

$$p_2 < \frac{\lambda}{1+NA},$$

worin $p_2$ eine Kennabmessung der Reliefstruktur in der Eintritssflächenebene ist, $\lambda$ die Wellenlänge des Strahlungsbündels und NA die numerische Apertur des Strahlungsbündels ist.

3. Optischer Aufzeichnungsträger nach Anspruch 1 oder 2, dadurch gekennzeichnet, dass die Tiefe der Antireflexionsreliefstruktur größer ist als die Tiefe einer Spurnachführungsreliefstruktur in der Aufzeichnungsschicht.

4. Optischer Aufzeichnungsträger nach Anspruch 1, 2 oder 3, worin die Aufzeichnungsschicht mit einer Spurnachführungsreliefstruktur versehen ist, und die Antireflexionsreliefstruktur dieselbe Gesamtsymmetrie wie die Spurnachführungsreliefstruktur hat.

5. Optischer Aufzeichnungsträger nach Anspruch 1, 2, 3 oder 4, worin die Antireflexionsreliefstruktur ein Gitter aufweist, wobei die Kennabmessung in der Eintrittsflächenebene die Mitte-zu-Mitte-Abstand des Gitters ist.

6. Optischer Aufzeichnungsträger nach Anspruch 5, worin das Antireflexionsgitter Rillen mit dreieckigem Querschnitt hat.

7. Optischer Aufzeichnungsträger nach einem oder mehreren der Ansprüche 1 bis 6, worin die Aufzeichnungsschicht einen Phasenänderungswerkstoff enthält.

8. Optischer Aufzeichnungsträger nach einem oder mehreren der Ansprüche 1 bis 7, worin eine Aufzeichnungsschicht und eine Interferenzschicht in dieser Reihenfolge zwischen dem Substrat und der Aufzeichnungsschicht angeordnet sind.

**Revendications**

1. Support d'enregistrement optique permettant d'écrire et/ou de lire des informations au moyen d'un faisceau de rayons, lequel support d'enregistrement comprend un substrat transparent ayant une face d'entrée recevant le faisceau de rayons et une face opposée, et une couche d'enregistrement disposée sur ladite face opposée, caractérisé en ce que la face d'entrée a une structure antireflet en relief.

2. Support d'enregistrement optique selon la revendication 1, caractérisé en ce que la structure antireflet en relief est conforme à la formule suivante :

$$p_2 < \frac{\lambda}{1 + NA},$$

où $p_2$ est une dimension caractéristique de la structure en relief dans le plan de la face d'entrée, $\lambda$ est la longueur d'onde du faisceau de rayons et $NA$ l'ouverture numérique du faisceau de rayons.

3. Support d'enregistrement optique selon la revendication 1 ou 2, caractérisé en ce que la profondeur de la structure antireflet en relief est supérieure à la profondeur d'une structure de pistes en relief dans la couche d'enregistrement.

4. Support d'enregistrement optique selon la revendication 1, 2 ou 3, dans lequel la couche d'enregistrement est pourvue d'une structure de pistes en relief et la structure antireflet en relief a la même symétrie générale que la structure de pistes en relief.

5. Support d'enregistrement optique selon la revendication 1, 2, 3 ou 4, dans lequel la structure antireflet en relief comprend un réseau de diffraction. la dimension caractéristique dans le plan de la face d'entrée étant égale au pas du réseau de diffraction.

6. Support d'enregistrement optique selon la revendication 5, dans lequel le réseau de diffraction antireflet a des rainures de section triangulaire.

7. Support d'enregistrement optique selon l'une quelconque des revendications 1 à 6, dans lequel le support d'enregistrement contient un matériau à changement de phase.

8. Support d'enregistrement optique selon l'une quelconque des revendications 1 à 7 comprenant une couche de réflexion et une couche d'interférence, dans cet ordre, disposées entre le substrat et la couche d'enregistrement.

FIG.1

FIG.2

FIG.3